# EUROPEAN PATENT APPLICATION

(11) **EP 4 300 748 A1**
(43) Date of publication of application: **03.01.2024**
(21) Application number: 21928817.2
(22) Date of filing: 22.10.2021
(51) Int. Cl.: H02J 3/01

(54) **TRACTION NETWORK HIGH HARMONIC SUPPRESSION METHOD AND SYSTEM, AND RAIL TRANSIT VEHICLE**

(30) Priority: 01.03.2021 CN 202110223229
(71) Applicant: CRRC Zhuzhou Locomotive Co., Ltd., Zhuzhou, Hunan 412001 (CN)
(72) Inventor: LIAO, Hongtao, Zhuzhou, Hunan 412001 (CN); WANG, Wei, Zhuzhou, Hunan 412001 (CN); ZOU, Huanqing, Zhuzhou, Hunan 412001 (CN); LUO, Xiaojuan, Zhuzhou, Hunan 412001 (CN); LEI, Xin, Zhuzhou, Hunan 412001 (CN); JIA, Yanxin, Zhuzhou, Hunan 412001 (CN)
(74) Representative: Ran, Handong
(86) International application number: PCT/CN2021/125456
(87) International publication number: WO 2022/183743

(57) **Abstract**

A traction network high harmonic suppression method and system, and a rail transit vehicle. The method comprises: collecting a network voltage of a contact network in real time, and calculating the harmonic content and the characteristic frequency of the network voltage; if the harmonic content is not less than a preset threshold value, determining that the network voltage is abnormal, and controlling a four-quadrant converter to stop running; and determining whether the characteristic frequency of the current network voltage is within a preset range of the characteristic frequency of a certain four-quadrant control mode, and if not, controlling the four-quadrant converter to run in the four-quadrant control mode.

## Description

### FIELD OF THE INVENTION

The present invention relates to the field of rail transit, in particular to a traction network high harmonic suppression method and system, and a rail transit vehicle.

### BACKGROUND OF THE INVENTION

At present, electric locomotives and multiple units in the field of rail transit mainly use electric drive technology adopting alternating current-direct current-alternating current conversion. A traction transformer converts high-voltage single-phase alternating current provided by a traction network into suitable low-voltage single-phase alternating current, which is then converted into direct current by a four-quadrant converter (also known as a PWM converter), and the direct current is converted into three-phase alternating current with adjustable voltage and frequency through a PWM inverter to drive a traction motor. The use of the network side four-quadrant converter enables an alternating current locomotive to obtain a relatively high-power factor and relatively low network side harmonic current. However, when a current characteristic spectrum, generated by the four-quadrant converter which is put into operation on a network side, coincides with a resonant frequency of the traction network, high-frequency resonance of the traction network is easily caused. High-frequency resonance accidents may cause a series of serious consequences, such as protection actions of ground traction substations, locomotive control logic actions, burning of high-voltage devices such as ground and on-board lightning arresters, and the like. Therefore, the research and use of high-frequency resonance suppression methods in train networks may avoid accidents caused by high-frequency resonance and help maintain normal railway transportation order. Besides, there is no research on the suppression of higher-order harmonics in a traction network in existing technologies.

### SUMMARY OF THE INVENTION

For the shortcomings of existing technologies, the technical problem to be solved by the present invention is to provide a traction network high harmonic suppression method and system, and a rail transit vehicle, in which high-order harmonics in a traction network are effectively suppressed.

To solve the foregoing technical problem, the technical solution adopted by the present invention is as follows: A traction network high harmonic suppression method includes the following steps:
S1, collecting a network voltage of a traction network in real time and calculating harmonic content of the network voltage;
S2, if the harmonic content is not less than a preset threshold value, determining that the network voltage is abnormal, and controlling a four-quadrant converter to stop operating; otherwise, outputting a characteristic frequency of the current network voltage; and
S3, determining whether the characteristic frequency of the current network voltage is within a preset characteristic frequency range of a four-quadrant control mode, and controlling the four-quadrant converter to operate in the four-quadrant control mode if the characteristic frequency of the current network voltage is not within the preset characteristic frequency range; if the characteristic frequency of the current network voltage is within the preset characteristic frequency range, comparing the characteristic frequency of the current network voltage with characteristic frequencies of other four-quadrant control modes until the characteristic frequency of the current network voltage exceeds a preset characteristic frequency range of another four-quadrant control mode, and controlling the four-quadrant converter to operate in the corresponding four-quadrant control mode; and returning to step S1 if the characteristic frequency of the current network voltage is within the preset characteristic frequency ranges of all the four-quadrant control modes.

The method of the present invention can effectively detect high-frequency resonance in the traction network, accurately determine an output control mode according to the comparison results, reliably suppress high-frequency resonance generated by the traction network, improve system stability, and provide multiple guarantees for reliable operation of locomotives.

In step S1, the harmonic content and characteristic frequency of the network voltage are calculated by using an FFT algorithm. The calculation process is simple and the calculation speed is fast.

A specific implementation process of step S3 includes:
1) determining whether the characteristic frequency of the current network voltage is within a characteristic frequency range of a first four-quadrant control mode, and if so, performing step 2); otherwise, controlling the four-quadrant converter to operate in the first four-quadrant control mode;
2) determining whether the characteristic frequency of the current network voltage is within a characteristic frequency range of a second four-quadrant control mode, and if so, performing step 3); otherwise, controlling the four-quadrant converter to operate in the second four-quadrant control mode;
3) determining whether the characteristic frequency of the current network voltage is within a characteristic frequency range of a third four-quadrant control mode, and if so, performing step 4); otherwise, controlling the four-quadrant converter to operate in the third four-quadrant control mode; and
4) determining whether the characteristic frequency of the current network voltage is within a characteristic frequency range of a fourth four-quadrant control mode, and if so, returning to S 1; otherwise, controlling the four-quadrant converter to operate in the fourth four-quadrant control mode.

Through the above processes, different four-quadrant control modes are preset without changing a main circuit topology of a conventional high-power electric locomotive traction network power supply mode, to further effectively detect high-frequency resonance of the traction network.

Correspondingly, the present invention further provides a traction network high harmonic suppression system, including:
a network voltage detection unit for collecting a network voltage of a traction network in real time;
a detection and calculation unit for calculating harmonic content and a characteristic frequency of the network voltage;
a center control unit for sending an abnormal network voltage signal and the characteristic frequency of the current network voltage to a traction control unit when the harmonic content is not less than a preset threshold value; comparing the characteristic frequency of the current network voltage with a preset characteristic frequency range of a four-quadrant control mode, and sending a signal of unlocking four-quadrant pulses to the traction control unit when the characteristic frequency of the current network voltage is not within the preset characteristic frequency range of the four-quadrant control mode; when the characteristic frequency of the current network voltage is within the preset characteristic frequency range of the four-quadrant control mode, comparing the characteristic frequency of the current network voltage with characteristic frequencies of other four-quadrant control modes until the characteristic frequency of the current network voltage exceeds a preset characteristic frequency range of another four-quadrant control mode, and controlling a four-quadrant converter to operate in the corresponding four-quadrant control mode; and
the traction control unit for locking four-quadrant pulses and controlling the four-quadrant converter to stop operating when receiving the abnormal network voltage signal; and controlling the four-quadrant converter to operate in the corresponding four-quadrant control mode when receiving the signal of unlocking four-quadrant pulses.

A specific implementation process of controlling the four-quadrant converter to operate in the corresponding four-quadrant control mode by the traction control unit includes:
1) determining whether the characteristic frequency of the current network voltage is within a characteristic frequency range of a first four-quadrant control mode, and if so, performing step 2); otherwise, controlling the four-quadrant converter to operate in the first four-quadrant control mode;
2) determining whether the characteristic frequency of the current network voltage is within a characteristic frequency range of a second four-quadrant control mode, and if so, performing step 3); otherwise, controlling the four-quadrant converter to operate in the second four-quadrant control mode;
3) determining whether the characteristic frequency of the current network voltage is within a characteristic frequency range of a third four-quadrant control mode, and if so, performing step 4); otherwise, controlling the four-quadrant converter to operate in the third four-quadrant control mode; and
4) determining whether the characteristic frequency of the current network voltage is within a characteristic frequency range of a fourth four-quadrant control mode, and if so, returning to S 1; otherwise, controlling the four-quadrant converter to operate in the fourth four-quadrant control mode.

The detection and calculation unit calculates the harmonic content and characteristic frequency of the network voltage by using an FFT algorithm.

The detection and calculation unit is integrated in the center control unit, which saves space and achieves light weight, small size, low cost, and strong practicability.

The present invention further provides a rail transit vehicle using the foregoing traction network high harmonic suppression system.

As an inventive concept, the present invention further provides a computer-readable storage medium storing a computer program/instructions, the steps of the traction network high harmonic suppression method of the present invention being implemented when the computer program/instructions are executed by a processor.

As an inventive concept, the present invention further provides a computer program product, including a computer program/instructions, the steps of the traction network high harmonic suppression method of the present invention being implemented when the computer program/instructions are executed by a processor.

Compared with the existing technologies, the present invention has the following beneficial effects:
1. On the basis of not changing a main circuit topology of a conventional high-power electric locomotive traction network power supply mode, the present invention can effectively detect high-frequency resonance of the traction network by adding the detection and calculation unit and presetting different four-quadrant control modes, accurately determine the output control mode according to the comparison results, reliably suppress the high-frequency resonance generated by the traction network, improve system stability, and provide multiple guarantees for reliable operation of locomotives.
2. The new unit is easily added on the existing mode without excessive hardware and space, and light weight, small size, low cost, and strong practicality are achieved.

### BRIEF DESCRIPTION OF THE DRAWINGS

FIG. 1 is a schematic diagram of a method in Embodiment 1 of the present invention; and
FIG. 2 is a structural block diagram of a system in Embodiment 2 of the present invention.

### DETAILED DESCRIPTION OF THE EMBODIMENTS

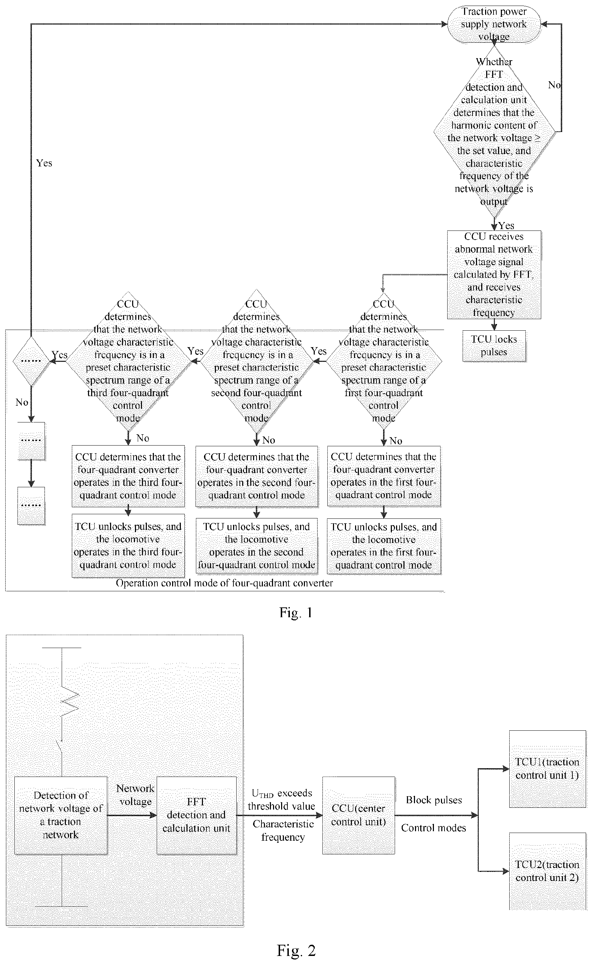

As shown in FIG. 1, novel signal collection and calculation units and control logic are introduced in Embodiment 1 of the present invention without changing a hardware architecture of an existing control system of a locomotive, to suppress high-frequency resonance of a traction network.

As shown in FIG. 2, an FFT (Fast Fourier transformation) calculation and detection unit (namely, a detection and calculation unit) is added between a traction network power supply voltage collection unit (namely, a network voltage detection unit) and a center control unit (CCU) in Embodiment 2 of the present invention. The FFT calculation and detection unit calculates harmonic content and a characteristic frequency of a network voltage in real time and determines in real time whether the harmonic content on a network side exceeds a set threshold value (such as 18%). The CCU presets multiple four-quadrant control operation modes according to locomotive line matching tests. The FFT sends an abnormal network voltage signal and a characteristic frequency of the current network voltage to the CCU when detecting that the harmonic content on the network side exceeds the set threshold value. After receiving the abnormal network voltage signal, the CCU sends the signal of abnormal network voltage to a TCU (Traction control unit) in time. The TCU receives the abnormal network voltage signal and locks four-quadrant pulses to stop operation of the four-quadrant converter. When receiving the abnormal network voltage signal, the CCU compares the characteristic frequency of the current network voltage with characteristic frequency ranges generated by different four-quadrant control methods preset by the CCU, determines a four-quadrant control method that the characteristic frequency range of network side current generated during locomotive operation does not include the characteristic frequency of the current network voltage, and sends the four-quadrant control method obtained by the comparison to the TCU. The TCU instruct the four-quadrant converter to switch to the corresponding four-quadrant control mode to continue operation. When a locomotive is put into operation, the FFT calculation and detection unit collects a network voltage of a traction network in real time and performs FFT calculation to determine whether the total harmonic content of the extracted network side voltage exceeds a preset network voltage THD (Total Harmonic Distortion) threshold value. If the harmonic content of the collected network voltage exceeds a predetermined value (such as 18%), the FFT triggers an abnormal network voltage signal, and immediately transmits the abnormal network voltage signal and the characteristic frequency of the current network voltage to the CCU. After receiving the abnormal network voltage signal, the CCU sends an instruction of the abnormal network voltage signal to the TCU, and the TCU receives the abnormal network voltage signal and locks four-quadrant converter pulses to stop operation of the four-quadrant converter. When receiving the abnormal network voltage signal, the CCU determines whether the characteristic frequency of the received network voltage exceeds preset characteristic spectrum ranges of different four-quadrant control methods. If the characteristic frequency of the real-time network voltage exceeds a characteristic frequency spectrum range of a first four-quadrant control mode, the CCU determines that the four-quadrant converter operates in the first four-quadrant control mode and sends a signal of unlocking four-quadrant converter pulses to the TCU, and the TCU unlocks the four-quadrant converter pulses after receiving the signal of unlocking four-quadrant converter pulses to allow the four-quadrant converter to operate in the first four-quadrant control mode. If the characteristic frequency of the real-time network voltage is within the range of the first four-quadrant control mode, the CCU continues to compare the characteristic frequency of the real-time network voltage with a preset characteristic spectrum range of a second four-quadrant control mode. If the characteristic frequency of the real-time network voltage exceeds the characteristic spectrum range of the second four-quadrant control mode, the CCU determines that the four-quadrant converter operates in the second four-quadrant control mode, and sends a signal of unlocking four-quadrant converter pulses to the TCU, and the TCU unlocks the four-quadrant converter pulses after receiving the signal of unlocking four-quadrant converter pulses to allow the four-quadrant converter to operate in the second four-quadrant control mode. If the characteristic frequency of the real-time network voltage is within the characteristic frequency range of the second four-quadrant control mode, the CCU compares the characteristic frequency value of the real-time network voltage with a preset characteristic spectrum range of a third four-quadrant control mode. If the characteristic frequency of the real-time network voltage exceeds the characteristic spectrum range of the third four-quadrant control mode, the CCU determines that the four-quadrant converter operates in the third four-quadrant control mode, and sends a signal of unlocking four-quadrant converter pulses to the TCU, and the TCU unlocks the four-quadrant converter pulses after receiving the signal of unlocking four-quadrant converter pulses to allow the four-quadrant converter to operate in the third four-quadrant control mode. If the characteristic frequency of the real-time network voltage is within the characteristic frequency range of the third four-quadrant control mode, the CCU compares the characteristic frequency value of the real-time network voltage with a preset characteristic spectrum range of a fourth four-quadrant control mode. If the characteristic frequency of the real-time network voltage exceeds the characteristic spectrum range of the fourth four-quadrant control mode, the CCU determines that the four-quadrant converter operates in the fourth four-quadrant control mode, and sends a signal of unlocking four-quadrant converter pulses to the TCU, and the TCU unlocks the four-quadrant converter pulses after receiving the signal of unlocking four-quadrant converter pulses to allow the four-quadrant converter to operate in the fourth four-quadrant control mode. The above determination process continues until a four-quadrant control mode suitable for the current line is determined.

That is:
1) When the network voltage THD (Total Harmonic Distortion) value calculated from the measured network voltage is lower than a preset network voltage THD value, the traction power supply voltage is normal and the locomotive maintains normal operation.
2) When the network voltage THD (Total Harmonic Distortion) value calculated from the measured network voltage reaches or exceeds the preset network voltage THD value, the FFT sends an abnormal network voltage signal and a characteristic frequency to the CCU. After receiving the abnormal network voltage signal, the CCU outputs a command of controlling the TCU to lock a four-quadrant converter pulse. Meanwhile, the CCU compares the characteristic frequency of the received network voltage with an equivalent switching frequency of the configured four-quadrant control method to determine whether the harmonic content of the network voltage exceeds set characteristic frequency ranges of different four-quadrant converter control modes, if so, the CCU issues an operation command of the current four-quadrant control mode, and the TCU unlocks four-quadrant converter pulses after receiving the CCU control command to switch the current four-quadrant operation control mode. The detailed architecture is shown in a high-frequency resonance suppression process diagram of FIG. 1, and the detailed control logic is shown in a high-frequency resonance suppression control logic diagram of FIG. 2.

The four-quadrant control modes of the present invention are shown in Table 1.

**Table 1 Characteristic frequency ranges in four-quadrant control modes**

| Four-quadrant misalignment angle | Four-quadrant control mode | Equivalent switching frequency (Hz) | Characteristic frequency range (Hz) |
|---|---|---|---|
| 45° | First four-quadrant control mode | 250 | 1300Hz~2700Hz |
| | Second four-quadrant control mode | 350 | 2100Hz~3500Hz |
| | Third four-quadrant control mode | 450 | 2900Hz~4300Hz |
| | Fourth four-quadrant control mode | 550 | 3700Hz~5100Hz |

## Claims

1. A traction network high harmonic suppression method, comprising the following steps:
S 1, collecting a network voltage of a traction network in real time and calculating harmonic content of the network voltage;
S2, if the harmonic content is not less than a preset threshold value, determining that the network voltage is abnormal, and controlling a four-quadrant converter to stop operating; otherwise, outputting a characteristic frequency of the current network voltage; and
S3, determining whether the characteristic frequency of the current network voltage is within a preset characteristic frequency range of a four-quadrant control mode, and controlling the four-quadrant converter to operate in the four-quadrant control mode if the characteristic frequency of the current network voltage is not within the preset characteristic frequency range; if the characteristic frequency of the current network voltage is within the preset characteristic frequency range, comparing the characteristic frequency of the current network voltage with characteristic frequencies of other four-quadrant control modes until the characteristic frequency of the current network voltage exceeds a preset characteristic frequency range of another four-quadrant control mode, and controlling the four-quadrant converter to operate in the corresponding four-quadrant control mode; and returning to step S1 if the characteristic frequency of the current network voltage is within the preset characteristic frequency ranges of all the four-quadrant control modes.

2. The traction network high harmonic suppression method according to claim 1, wherein in step S1, the harmonic content and characteristic frequency of the network voltage are calculated by using an FFT algorithm.

3. The traction network high harmonic suppression method according to claim 1 or 2, wherein a specific implementation process of step S3 comprises:
1) determining whether the characteristic frequency of the current network voltage is within a characteristic frequency range of a first four-quadrant control mode, and if so, performing step 2); otherwise, controlling the four-quadrant converter to operate in the first four-quadrant control mode;
2) determining whether the characteristic frequency of the current network voltage is within a characteristic frequency range of a second four-quadrant control mode, and if so, performing step 3); otherwise, controlling the four-quadrant converter to operate in the second four-quadrant control mode;
3) determining whether the characteristic frequency of the current network voltage is within a characteristic frequency range of a third four-quadrant control mode, and if so, performing step 4); otherwise, controlling the four-quadrant converter to operate in the third four-quadrant control mode; and
4) determining whether the characteristic frequency of the current network voltage is within a characteristic frequency range of a fourth four-quadrant control mode, and if so, returning to S 1; otherwise, controlling the four-quadrant converter to operate in the fourth four-quadrant control mode.

4. A traction network high harmonic suppression system, comprising:
a network voltage detection unit for collecting a network voltage of a traction network in real time;
a detection and calculation unit for calculating harmonic content and a characteristic frequency of the network voltage;
a center control unit for sending an abnormal network voltage signal and the characteristic frequency of the current network voltage to a traction control unit when the harmonic content is not less than a preset threshold value; comparing the characteristic frequency of the current network voltage with a preset characteristic frequency range of a four-quadrant control mode, and sending a signal of unlocking four-quadrant pulses to the traction control unit when the characteristic frequency of the current network voltage is not within the preset characteristic frequency range of the four-quadrant control mode; when the characteristic frequency of the current network voltage is within the preset characteristic frequency range of the four-quadrant control mode, comparing the characteristic frequency of the current network voltage with characteristic frequencies of other four-quadrant control modes until the characteristic frequency of the current network voltage exceeds a preset characteristic frequency range of another four-quadrant control mode, and controlling a four-quadrant converter to operate in the corresponding four-quadrant control mode; and
the traction control unit for locking four-quadrant pulses and controlling the four-quadrant converter to stop operating when receiving the abnormal network voltage signal; and controlling the four-quadrant converter to operate in the corresponding four-quadrant control mode when receiving the signal of unlocking four-quadrant pulses.

5. The traction network high harmonic suppression system according to claim 4, wherein a specific implementation process of controlling the four-quadrant converter to operate in the corresponding four-quadrant control mode by the traction control unit comprises:
1) determining whether the characteristic frequency of the current network voltage is within a characteristic frequency range of a first four-quadrant control mode, and if so, performing step 2); otherwise, controlling the four-quadrant converter to operate in the first four-quadrant control mode;
2) determining whether the characteristic frequency of the current network voltage is within a characteristic frequency range of a second four-quadrant control mode, and if so, performing step 3); otherwise, controlling the four-quadrant converter to operate in the second four-quadrant control mode;
3) determining whether the characteristic frequency of the current network voltage is within a characteristic frequency range of a third four-quadrant control mode, and if so, performing step 4); otherwise, controlling the four-quadrant converter to operate in the third four-quadrant control mode; and
4) determining whether the characteristic frequency of the current network voltage is within a characteristic frequency range of a fourth four-quadrant control mode, and if so, returning to S 1; otherwise, controlling the four-quadrant converter to operate in the fourth four-quadrant control mode.

6. The traction network high harmonic suppression system according to claim 4, wherein the detection and calculation unit calculates the harmonic content and characteristic frequency of the network voltage by using an FFT algorithm.

7. The traction network high harmonic suppression system according to one of claims 4-6, where the detection and calculation unit is integrated in the center control unit.

8. A computer-readable storage medium, storing a computer program/instructions, wherein the steps of the traction network high harmonic suppression method according to one of claims 1-3 are implemented when the computer program/instructions are executed by a processor.

9. A computer program product, comprising a computer program/instructions, wherein the steps of the traction network high harmonic suppression method according to one of claims 1-3 are implemented when the computer program/instructions are executed by a processor.

10. A rail transit vehicle, comprising the traction network high harmonic suppression system according to one of claims 4-7.
